# EUROPEAN PATENT APPLICATION

(11) **EP 4 286 690 A1**
(43) Date of publication of application: **06.12.2023**
(21) Application number: 23174479.8
(22) Date of filing: 22.05.2023
(51) Int. Cl.: F04D 17/16, F04D 19/00, F04D 25/06, F04D 25/08, H02K 1/00, F04D 29/02, F04D 17/06

(54) **VENTILATION DEVICE**

(30) Priority: 01.06.2022 IT 202200011663
(71) Applicant: Sagula, Maria, 24040 Verdellino (BG) (IT)
(72) Inventor: SAGULA, Maria, 24040 VERDELLINO (BG) (IT); MADONINI, Luigi, Dovera (CR) (IT)
(74) Representative: Villa, Livia

(57) **Abstract**

A ventilation device (1) comprising an electric motor (2) equipped with a rotor active part (3A) to which blades (4A, 4B, 4C) of a fan (5) and a stator (6) are torsionally coupled; the electric motor (2) is of the synchronous reluctance type, with a wound stator (6) which is positioned, at least partially, inside the rotor active part (3A), the rotor active part (3A) being made, at least partially, of ferromagnetic material.

## Description

### FIELD OF THE INVENTION

The present invention relates to a ventilation device.

In particular, it refers to a ventilation device utilised in the civil or industrial heating and/or ventilation and/or air conditioning (HVAC) sector, and also in the HORECA (hotels, restaurants, and cafes) sector.

### BACKGROUND ART

One of the most important parts of an HVAC system is the fan device that moves the (filtered, conditioned, heated, etc.) air through the ventilation conduits.

Commonly known fan devices comprise an electric motor which rotates an impeller equipped with blades which process the air flow. The impeller may be of the centrifugal, axial, tangential or helical-centrifugal type.

Prior art envisages the use of conventional motors which, however (especially in the case of very large impellers, therefore with high inertia) make starting difficult.

Furthermore, they are not very efficient.

In recent times, the need has also arisen to control the rotation speed of these electric motors via an inverter. To manage the considerable workloads due to the significant inertias involved, the inverters must be oversized (therefore non-standard inverters must be utilised) and the cost thereof, in the system, is particularly burdensome.

### SUMMARY OF THE INVENTION

The object of the present invention is to provide a ventilation device which is improved compared with the prior art.

A further object of the invention is to provide a ventilation device which is more efficient and therefore less expensive than conventional ones.

A still further object of the invention is to provide a ventilation device which is cheaper than those accordingly to commonly known technique.

This and other objects are achieved by means of a ventilation device according to the technical teachings of the claims appended hereto.

Advantageously, to increase performance, it is possible to use simple magnets or an intermediate magnetic alloy containing recycled rare earth elements.

### BRIEF DESCRIPTION OF THE FIGURES

Further features and advantages of the innovation will become clearer in the description of a preferred but not exclusive embodiment of the ventilation device, illustrated - by way of a non-limiting example - in the drawings annexed hereto, in which:
Figure 1 is a perspective view of a motor of the ventilation device according to the present invention;
Figure 2 is a perspective view of a possible configuration of the ventilation device according to the present invention, more specifically of a centrifugal fan device;
Figure 3 is a perspective view of a further possible configuration of the ventilation device according to the present invention, more specifically of an axial fan device;
Figure 4 is a perspective view of a further possible configuration of the ventilation device of the present invention, more specifically of a centrifugal fan device with backward curved blades;
Figure 5 is an axial sectional view of the motor in Figure 1;
Figure 6 is a perspective view of a rotor active part of the motor in Figure 1;
Figure 7 is a perspective view of a part of the stator of the motor in Figure 1, complete with windings and the insulation system;
Figure 8 is a perspective view of a part of the stator of the motor in Figure 1, in which the insulation system is clearly highlighted; and
Figure 9 is a front view of the rotor active part in Figure 6.

### DETAILED DESCRIPTION OF THE INVENTION

With reference to the figures stated, reference number 1 is used to denote a ventilation device as a whole.

The ventilation device 1 can be used, in particular, within special systems in the domestic or industrial ventilation, heating, air conditioning, or filtration sector.

One field of application is the field referred to with the acronym 'HORECA', i.e. hotels, restaurants, and cafes, in addition to shops in general, but also the following fields: hospitals, animal husbandry and agriculture, companies and organisations, etc.

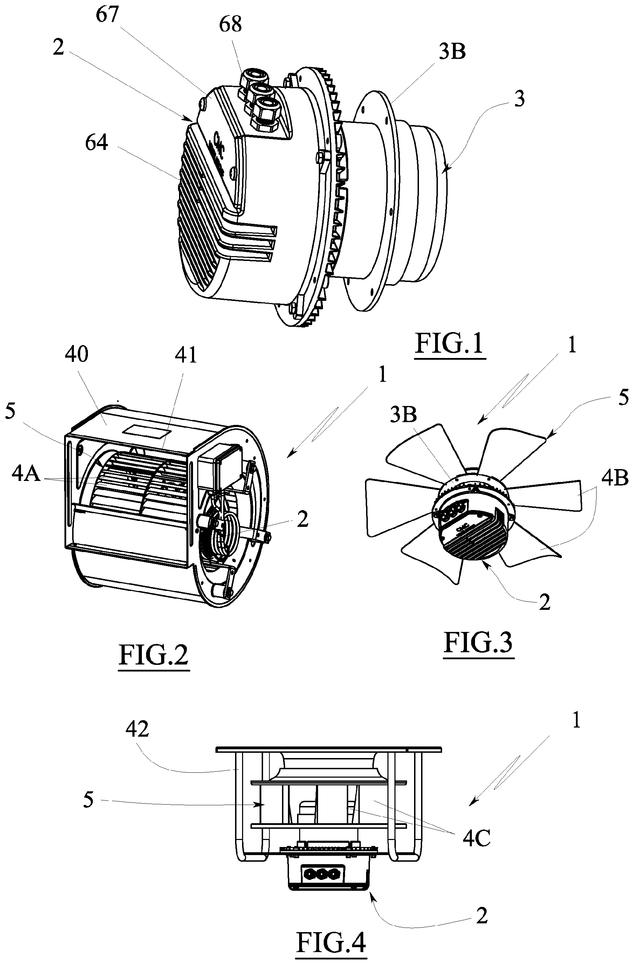

The ventilation device 1 comprises an electric motor 2, shown by way of an example in Figure 2, equipped with a rotor 3 to which the blades 4A of a fan 5 are torsionally fixed.

The rotor 3 may be equipped with a flange 3B to which the blades 4A, 4B, 4C or the impeller 5 can be torsionally fixed.

Figures 2 to 4 show some examples of blades/fans that can be fixed to the rotor 3 and therefore of possible configurations of the ventilation device 1.

Figure 2 shows a centrifugal fan device with a fan 5 with "forward curved" blades 4A, i.e. in which the air is expelled tangentially to the circumference of the fan. The fan device therefore comprises a casing 40 equipped with an opening 41 which can be coupled to a ventilation conduit or to a compartment (not shown) in which air conditioning, heating, filtration, and treatment means in general may be present. The casing 40 directs, in a commonly known way, the air flow generated by the rotation of the blades 4A towards the mouth 41.

Figure 3 shows an axial fan device. In this case, the blades 4B are of the axial type and are fixed directly to the flange 3B. Figure 3 does not show a casing or frame for the ventilation device, however a casing or frame may be present.

Figure 4 shows a centrifugal fan with 'backwards curved' blades 4C, i.e. in which the air is expelled in a radial direction around the circumference of the fan. Also in this case, the device 1 comprises a casing 42 which directs, in a commonly known way, the air flow generated by the blades 4C.

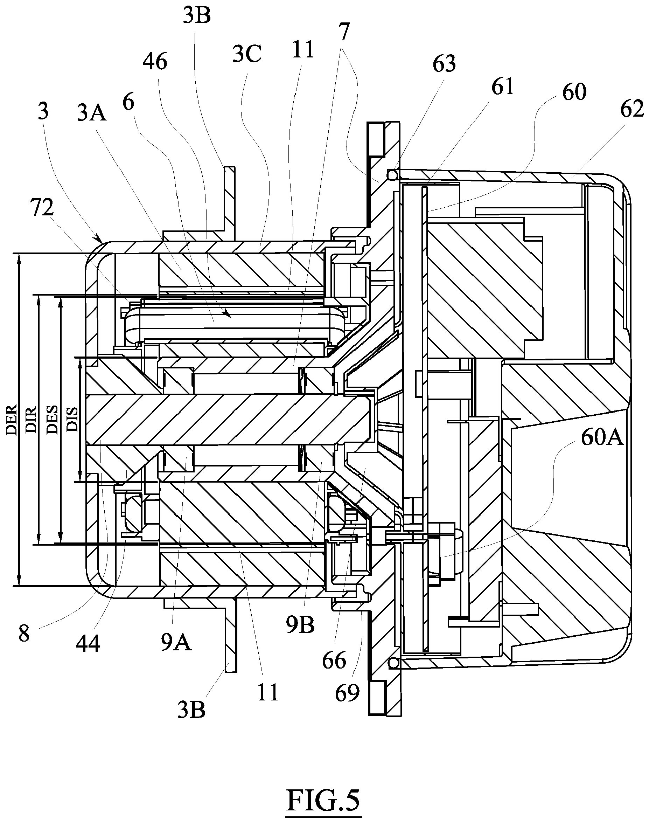

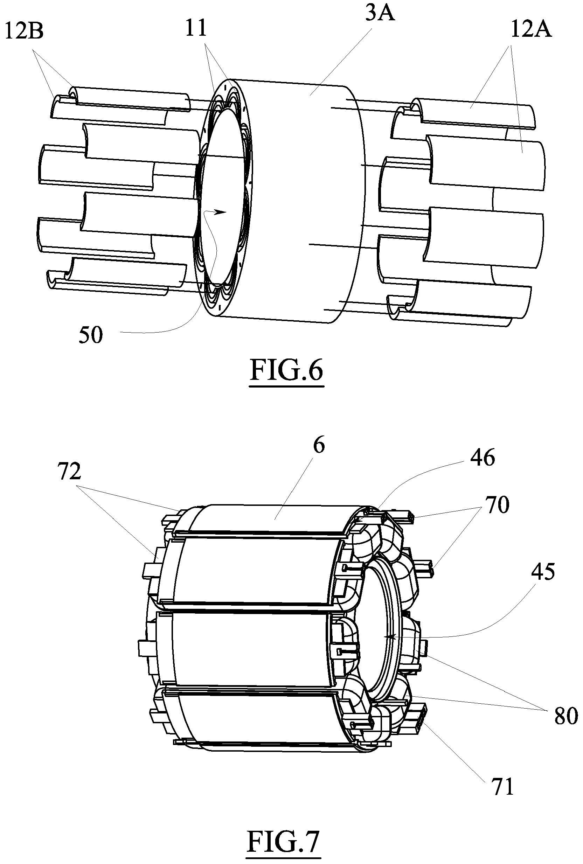

The motor 2 also comprises a stator 6, visible in Figure 5 and (in more detail) in Figure 7. As can be seen in the figure, the stator 6 is of the wound kind and therefore comprises a part consisting of electric filaments 80 through which a current flows which generates a rotating magnetic field which drives the said motor.

The electric motor 2 is therefore of the synchronous reluctance kind, with a wound stator 6 and with a rotor 3 in which, at least in one rotor active part 3A, a magnetic field is generated, which is 'induced' by the magnetic field generated, in turn, by the stator.

According to the invention, at least part of the stator 6 is positioned internally with respect to the rotor active part 3A, the rotor active part 3A being made at least partially of ferromagnetic material, preferably of rolled iron.

Therefore, the rotor active part 3A surrounds the stator 6.

Indeed, regarding the stator 6, the 'maximum' diameter of one of the stator active parts (therefore, where the rotating magnetic field is generated) is smaller than the 'minimum' diameter of the rotor active part 3A, with the result that, in the cross sectional view of an 'active' part of the motor, the stator is located inside the rotor.

As can be seen in Figure 5, the rotor 3 may advantageously comprise a cup element 3C which is torsionally fixed to the rotor active part 3A. Fixed to the cup A, there may be a flange 3B, to which the blades are, in turn, fixed.

The cup element 3C may be fixed, for example by means of a bush 44, to a shaft 8, supported by at least one bearing 9A, 9B.

The cup element 3C may also be made of ferromagnetic material, or of non-ferromagnetic material, such as, for example, aluminium or an alloy thereof.

At least a portion of the said shaft 8 may be positioned inside the said wound stator 6. Advantageously, the part of the said shaft 8 positioned inside the wound stator 6 is larger than the part positioned externally thereto.

As can be seen in Figure 5, the shaft 8 is supported by a first bearing 9A and a second bearing 9B, both is located inside the said stator 6.

The stator 6 may be supported (therefore, fixed stably or secured) to a frame 7, which can also support the first and second bearings 9A, 9B.

In order to house at least part of the shaft 8, the bearings, and at least part of the frame 7, the stator 6 may have a tubular configuration, such as the one shown in Figure 7, which determines a cavity 45 within which the said parts are housed.

The stator 6 may be of the concentrated winding kind, preferably with a number of slots per pole and per phase Q less than or equal to 1. For example, it is possible to use a stator with 6, 9, 12, or 24 slots.

A concentrated winding 80 rather than a distributed winding involves lower manufacturing costs and times.

Furthermore, there is a number of stator slots per pole and per phase Q<=1 (with 9 slots in the case shown), thereby maintaining a good torque ripple, which is an important requirement for fan devices.

The minimisation of the number of stator slots 46 makes it possible to have a greater stator slot area, which makes it possible to use simpler, less expensive insulation, i.e. of the kind forming an 'intersection' between the plastic parts which are necessary for the insulation of the stator slots and the winding heads.

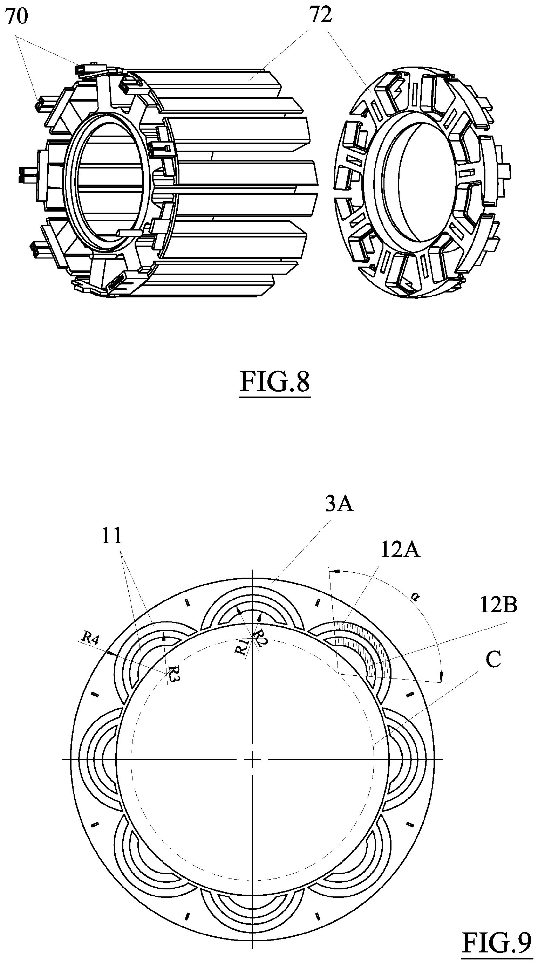

Furthermore, the stator 6 may feature insulation parts 72 (better visible in Figure 8), which are advantageously made of plastic material inserted into the stator slots 46 and/or coupled with the winding heads 80.

A ratio between an external diameter DES of the stator 6 and an internal diameter DIS of the stator 6 can be between 1.8:1 and 2.2:1, and is preferably 2:1.

This makes a large internal space available for the frame 7, which will be more solid as a result and will furthermore allow the use of adequately sized bearings 9A, 9B, thereby ensuring better balancing of peak loads.

As can be seen in Figure 6, the rotor active part 3A, which is torsionally fixed to the cup 3C and is the part thereof closest to the stator 6, has an essentially hollow cylinder configuration and has a plurality of seats 11 in which permanent magnets 12A, 12B may be housed.

The active part 3A of the rotor 3 has a cavity 50 inside which the stator 6 may be least partially housed.

The term 'at least partially housed' means that the part of the stator 6 which generates the magnetic field which is effective to drive the rotation of the rotor 3 is housed inside the rotor 3 and is, therefore, in practice, an 'active' part of the stator 6.

Advantageously, the permanent magnets 12A, 12B (which, as mentioned, may be optional) have an elongated conformation and an arcuate cross-section, identical to that of the slots which form the flow barriers 11.

Each magnet 12A, 12B may also be made as two or more pieces, which are also not necessarily mutually fixed. Indeed, when any separate pieces are inserted into the slots which form the flow barriers 11, the said pieces apply their magnetic action and remain fitted in the slots stably, secured, for example, with adhesives or other suitable commonly known means.

These magnets 12A, 12B may also be made of relatively simple material, for example ferrite or ferrite-based, or recycled plasto-neodymium.

An advantageous remanence value (Br) of the magnets usable is between 0.3 T and 0.8 T, and is preferably 0.4 T.

It has been noted that by inserting small numbers of permanent magnets in at least the active part of the rotor 3A, it is possible to considerably increase the power factor of the device and consequently reduce the sizing of the drive inverter, resulting in considerable cost savings.

Furthermore, the presence of small magnets 12A, 12B ensures higher dynamics and this condition facilitates the acceleration of aeraulic inertial loads, like those of the fan devices, however the generation of the main magnetic flow is due solely to the stator currents.

The seats 11 in which the magnets are fitted, which can also be empty, act as flow barriers, which direct the magnetic flow and support machine operation, positively impacting the torque ripple value and therefore the acoustic level of the fan device.

As already mentioned, the said seats can also be present in the absence of the magnets 12A, 12B.

The slots (or seats 11) that determine the flow barriers, better visible in Figure 9, can be grouped in groups of two, wherein one slot is more internal and one more external.

Preferably each slot is determined, from a front view, by walls forming an arc of circumference.

Advantageously, the arcs of circumference which determine the radially aligned slots (or each group of slots) are concentric).

In this way, for example, the radially innermost slot can be determined by walls with radii R1 and R2, while the radially outermost slot can be determined by walls with radii R3 and R4, which are greater than R2.

Advantageously, the radii R1, R2, R3, and R4 are identical for all groups of slots.

The centres of curvature of the arcs which determine the slots can all lie on an internal circumference C with respect to the internal diameter of the rotor active part 3A.

Advantageously, eight groups of slots may be envisaged, radially grouped two by two and mutually spaced at identical distances along the wall of the rotor active part.

It is also possible that, for each group of slots, a further smaller internal slot may be envisaged (therefore, a third slot for each group), with the same characteristics as those already described but obviously with a smaller diameter with respect to R1.

Given the small size thereof, this further slot will, advantageously, be devoid of magnets.

Advantageously an angle α (Fig. 9) of the arc subtended by the magnets 12A and 12B has been optimised and the maximum value thereof is 110°. It should be noted that in Figure 9, the magnets are shown (from a sectional view), by way of example, within a single group of slots, but obviously the said magnets could be present in all groups of slots 11.

Also with regards to the rotor active part 3A, (therefore, excluding the flange 3B and the cup element 3C), the ratio between the external diameter thereof DER and the internal diameter thereof DIR may be between 1.25:1 and 1.45:1, and is preferably 1.35:1. This optimises rotor inertia.

Bringing the description to an end, it must be emphasised that the operating dynamics of this motor 2 include the possibility of adjusting the advance angle between the rotating field and the mechanical neutral position of the rotor.

In this way, it is possible to obtain torque rates that are 10% higher than those which would be obtained without this adjustment.

The motor 2 may be devoid of hall sensors, brushes, or manifolds. Therefore, the adjustment of the advance angle may be performed electronically, directly by the command inverter. It has been established that an optimal value of the advance angle is δ=+6°

In the motor 2 described, the detent torque when the motor is not powered is very low, having a value of approximately 0.015 Nm.

As can be seen from Figure 5, the control electronics 60 can be incorporated directly into the motor. The electrical part of the motor 2 is connected to the electronic part by a connection consisting of dedicated terminals 70, 71 positioned on the stator, which connect the motor phase wires and any thermal protector/s fitted in the stator slots directly with the control electronics.

The passage can be implemented via the frame 7.

An electrical insulation plastic cap 61 is placed between the metal parts of the frame 7 and the electronic control part 60 equipped with an inverter 60A.

The electronics enclosure 62 is located above the motor support and, in addition to guaranteeing a watertight seal by means of the gaskets 63, it is also equipped with a particular finned area 64 (Fig. 1) which "viewed externally" dissipates the heat developed by the power device and "viewed internally" performs the function of support surface for the power device; this decreases thermal resistance and increases dispersion of the heat developed by the power bridge during the commutation phase towards the external environment.

The efficiency of the dissipation of the heat developed by the electronic devices of the inverter is also increased by the presence of a radial fan 66 (for example, made of plastic) located under the circuit board fitted directly onto the shaft 8. The fan expels the air radially through the fins visible in Figure 1.

The electronics enclosure 62 is equipped with a compartment with a terminal block for connecting the motor to the power mains, for the input signals and for driving the motor; the compartment is sealed by a compartment cover 67 with a gasket.

The power cables run out of the electronics enclosure through the cable glands 68, which ensure the circuit board is watertight.

When the motor is rotating, the watertightness of the rotor cup element 3C is guaranteed by labyrinth seals 69 made between the said cup element and the frame 7.

Various embodiments of the innovation have been disclosed herein, but further embodiments may also be conceived using the same innovative concept.

## Claims

1. Ventilation device (1) comprising an electric motor (2) equipped with an active rotor part (3A) to which the blades (4A, 4B, 4C) of a fan (5) are torsionally coupled, and a stator (6), the electric motor (2) being of the synchronous reluctance type, with a wound stator (6) which is positioned, at least partially, inside the rotor active part (3A), the rotor active part (3A) being made at least partially in ferromagnetic material, **characterized in that** the rotor active part (3A) is torsionally coupled to a cup element (3C) torsionally fixed to a shaft (8) supported by two bearings (9A, 9B), at least a portion of said shaft (8) and the two bearings (9A, 9B) being surrounded by said wound stator (6), the rotor active part (3A) being fixed to the cup element (3C) so that it surrounds the stator (6), the blades (4A, 4B, 4C) being supported by the cup element (3C), advantageously by means of a flange (3B) fixed to said cup element (3C).

2. Device according to the preceding claim, wherein the blades (4A, 4B, 4C) are directly fixed to the cup element (3C) or to the flange (3B).

3. Device according to one or more of the preceding claims in which the motor has a frame (7) which supports the stator (6) and said two bearings (9A, 9B) .

4. Device according to claim 1, wherein the rotor active part (3A) has a substantially hollow cylinder configuration and has a plurality of cavities which define flow barriers (11).

5. Device according to the previous claim, in which permanent magnets (12A, 12B) are housed inside the cavities that define the flow barriers (11).

6. Device according to the preceding claim in which the permanent magnets (12A, 12B) have an elongated conformation and an arcuate cross-section.

7. Device according to claim 6, wherein said magnets (12A, 12B) are made of ferrite or ferrite-based, or of plasto-neodymium, with preferably recycled neodymium.

8. Device according to claim 1, wherein the stator (6) is of the concentrated winding type, preferably with a number of slots per pole and per phase less than or equal to 1.

9. Device according to claim 1, in which the stator (6) provides insulation parts (72) in plastic material inserted in the stator slots and / or associated with the winding heads.

10. Device according to claim 1, wherein the ratio between an external diameter (DER) and an internal diameter (DIR) of the active rotor part (3A) is comprised between 1.25 and 1.45, preferably 1.35.

11. Device according to claim 1, a ratio between an external diameter of the stator (DES) and an internal diameter of the stator (DIS) is between 1.8 and 2.2, preferably 2.
